# EUROPÄISCHE PATENTSCHRIFT

(11) **EP 3 645 368 B1**
(45) Veröffentlichungstag und Bekanntmachung des Hinweises auf die Patenterteilung: **07.04.2021**
(21) Anmeldenummer: 18734097.1
(22) Anmeldetag: 07.06.2018
(51) Int. Cl.: B61L 15/00, B61L 27/00

(54) **SYSTEM UND VERFAHREN ZUM ÜBERREGIONALEN BETREIBEN EINES FAHRZEUGS**
SYSTEM AND METHOD FOR THE SUPRAREGIONAL OPERATION OF A VEHICLE
SYSTÈME ET PROCÉDÉ POUR LE FONCTIONNEMENT INTERRÉGIONAL D'UN VÉHICULE

(30) Priorität: 08.08.2017 DE 102017213803
(43) Veröffentlichungstag der Anmeldung: 06.05.2020
(73) Patentinhaber: Siemens Mobility GmbH, 81739 München (DE)
(72) Erfinder: REINICKE, Stefan, 85304 Ilmmünster (DE); STRÖSSNER, Christian, 91091 Grossenseebach (DE)
(86) Internationale Anmeldenummer: PCT/EP2018/065007
(87) Internationale Veröffentlichungsnummer: WO 2019/029860

(56) Entgegenhaltungen:
- EP-A1- 1 065 127
- EP-A2- 2 399 802
- Db Netz Ag: "European Train Control System (ETCS) bei der DB Netz AG", , 30. April 2014 (2014-04-30), Seiten 1-20, XP055507546, Gefunden im Internet: URL:https://www.deutschebahn.com/resource/ blob/1303328/d9556ec0c860abb53cf07bfcb693f 79d/Anhang_Themendienst_ETCS-data.pdf [gefunden am 2018-09-17]

## Beschreibung

Die Erfindung betrifft ein System zum überregionalen Betreiben eines Fahrzeugs. Die Erfindung betrifft ferner ein Verfahren zum überregionalen Betreiben eines Fahrzeugs. Die Erfindung betrifft ferner ein Computerprogrammprodukt.

Der bisher in der Schienenverkehrstechnik etablierte Ansatz einer zentralen Fahrzeugsteuerung, die in einem einzelnen Gerät übergeordnete Leittechnik-Funktionen beinhaltet, zeigt Nachteile bei der Verwendung von Software im grenzüberschreitenden Verkehr im Hinblick auf die Fahrzeugzulassung.

Zur Erzielung von Einsparungseffekten in der Fahrzeugzulassung ist es häufig sinnvoll, im zu verlassenden Land eine andere Software zu verwenden als im Zielland. Zu diesem Zweck muss bei einem fahrenden bzw. rollenden Grenzübertritt (Transition) die Fahrzeugsteuerung während der Fahrt umkonfiguriert, d.h. entsprechende Software für die Fahrzeugsteuerung ausgetauscht werden. Während des Zeitraums des Umkonfigurierens müssen wesentliche Fahrzeugfunktionen weiterhin zur Verfügung stehen, soweit diese für den Grenzübertritt erforderlich sind.

In bekannten Fahrzeugen werden notwendige Umkonfigurationen beim Grenzübertritt im Stillstand vorgenommen. Es sind Fahrzeuge bekannt, die für die entsprechenden Zielländer eigene Hardware beinhalten, die beim Grenzübertritt aktiviert bzw. deaktiviert wird. Bekannt ist ferner eine Verwendung einer monolithischen Software, in der alle Funktionen aller zu befahrenden Länder in einer einzigen Software enthalten sind.

Eine behördliche Zulassung der genannten Steuerungssoftware ist insbesondere im europäischen Zulassungsprozess mit vielen unterschiedlichen Ländern aufwendig und kostenintensiv, da Wiederzulassungen aufgrund von Änderungen der Steuerungssoftware für ein Land stets in allen Ländern durchgeführt werden müssen. Dadurch entsteht ein Risiko dadurch, dass eine in Teilen Europas bereits zugelassene Software auf Verlangen einer weiteren Zulassungsbehörde zur Zulassung vorgelegt werden muss, wobei unter Umständen die Gefahr besteht, Funktionen spezifisch und möglicherweise zueinander widersprüchlich implementieren zu müssen.

Es ist eine Aufgabe der vorliegenden Erfindung, ein verbessertes überregionales Betreiben eines Fahrzeugs bereitzustellen

Die Erfindung ist durch die Merkmale der unabhängigen Ansprüche definiert.

Die Aufgabe wird gemäß dem unabhängigen Anspruch 1 gelöst mit einem System zum überregionalen Betreiben eines Fahrzeugs, aufweisend:
- wenigstens eine Steuerungsvorrichtung;
- wobei an die Steuerungsvorrichtung ein erster Fahrzeugbus anschließbar ist, wobei an den ersten Fahrzeugbus eine definierte Anzahl von ersten Steuerungseinrichtungen anschließbar ist; und
- wobei an die Steuerungsvorrichtung ein zweiter Fahrzeugbus anschließbar ist, wobei an den zweiten Fahrzeugbus eine definierte Anzahl von zweiten Steuerungseinrichtungen anschließbar ist;
- wobei die Steuerungsvorrichtung ausgebildet ist, eine definierte Minimalfunktionalität während eines rollenden Übergangs des Fahrzeugs von einer definierten ersten Region in eine definierte zweite Region bereitzustellen,indem ein Betrieb der ersten Steuerungseinrichtungen und des ersten Fahrzeugbusses aufrecht erhalten wird;
- wobei die Steuerungsvorrichtung ausgebildet ist, für die zweiten Steuerungseinrichtungen während des rollenden Übergangs von der definierten ersten Region in die definierte zweite Region eine Funktionalität zu ändern; und
- wobei die Steuerungsvorrichtung ausgebildet ist, eine Koordinierung des Änderns der Funktionalität der zweiten Steuerungseinrichtungen zu steuern.

Auf diese Weise wird für das Fahrzeug eine sichere rollende Transition von der ersten Region in die zweite Region unter Verwendung einer Minimalfunktionalität der Steuerungsvorrichtung ermöglicht. Aufgrund des definierten Änderns der Funktionalität der zweiten Steuerungseinrichtungen kann dies durchgeführt werden, ohne einen sicheren Betrieb des Fahrzeugs während der Transition zu gefährden, wobei zugleich ein Betrieb der ersten Steuerungseinrichtungen und des ersten Fahrzeugbusses aufrecht erhalten wird.

Dadurch wird für das Fahrzeug in den einzelnen Regionen eine jeweils eigenständige Funktionalität bereitgestellt, sodass bei Erkennen und Auslösen bzw. Erkennen und Verifizieren eines Regionswechsels ein Ändern der Funktionalität für das jeweilige Land durchgeführt wird.

Gemäß dem unabhängigen Anspruch 9 wird die Aufgabe gelöst mit einem Verfahren zum überregionalen Betreiben eines Fahrzeugs mittels eines Systems mit wenigstens einer Steuerungsvorrichtung, einem an die Steuerungsvorrichtung angeschlossenen ersten Fahrzeugbus mit einer definierten Anzahl von an den ersten Fahrzeugbus angeschlossenen ersten Steuerungseinrichtungen, und einem an die Steuerungsvorrichtung angeschlossenen zweiten Fahrzeugbus mit einer definierten Anzahl von an den zweiten Fahrzeugbus angeschlossenen zweiten Steuerungseinrichtungen, aufweisend die Schritte:
- Bereitstellen einer definierten Minimalfunktionalität während eines rollenden Übergangs des Fahrzeugs von einer definierten ersten Region in eine definierte zweite Region mittels der Steuerungsvorrichtung, indem ein Betrieb der ersten Steuerungseinrichtungen und des ersten Fahrzeugbusses aufrecht erhalten wird;
- Ändern einer Funktionalität der zweiten Steuerungseinrichtungen während des rollenden Übergangs von der definierten ersten Region in die definierte zweite Region mittels der Steuerungsvorrichtung;
- Betreiben des Fahrzeugs während des Übergangs von der definierten ersten Region in die definierte zweite Region mittels der Minimalfunktionalität der Steuerungsvorrichtung.

Eine bevorzugte Ausführungsform des erfindungsgemäßen Systems zeichnet sich dadurch aus, dass der erste Fahrzeugbus des Fahrzeugs nicht-rücksetzbar und der zweite Fahrzeugbus des Fahrzeugs rücksetzbar ausgebildet ist. Auf diese Weise können die ersten Steuerungseinrichtungen während der rollenden Transition stabil agieren, wodurch eine stabile Funktionalität der ersten Steuerungseinrichtungen unterstützt ist. Durch die Rücksetzbarkeit des zweiten Fahrzeugbusses kann ferner eine einfache Umkonfiguration der zweiten Steuerungseinrichtungen durchgeführt werden.

Eine weitere bevorzugte Ausführungsform des erfindungsgemäßen Systems zeichnet sich dadurch aus, dass der Übergang von der definierten ersten Region in die definierte zweite Region mittels einer an die Steuerungsvorrichtung angebundenen Eingabeeinrichtung eingebbar ist. Auf diese Weise kann vorteilhaft z.B. von einem Triebfahrzeugführer des Fahrzeugs ein Beginn der rollenden Transition an die Steuerungsvorrichtung signalisiert werden.

Eine weitere bevorzugte Ausführungsform des erfindungsgemäßen Systems zeichnet sich dadurch aus, dass der Übergang von der definierten ersten Region in die definierte zweite Region an die Steuerungsvorrichtung mittels einer Verortungseinrichtung, vorzugsweise in Form eines GPS-Sensor und/oder einer Kameraeinrichtung und/oder einer Balise signalisierbar ist. Dadurch werden auf einfache Weise weitere technische Mittel zum Erkennen eines Regionswechsels bereitgestellt, wodurch für das Fahrzeug eine an die neue Region angepasste Steuerungssoftware operabel gemacht wird.

Eine weitere bevorzugte Ausführungsform des erfindungsgemäßen Systems zeichnet sich dadurch aus, dass eine an den ersten Fahrzeugbus angebundene nicht-rücksetzbare Steuerungseinrichtung wenigstens eine definierte Kombination aus folgenden Funktionalitäten umfasst: Unterstützungsfunktionen für die Zugsicherung, Sandung, Bremsung, Sicherheitsfahrschaltung, Geschwindigkeitserfassung, Geschwindigkeitsanzeige.

Die genannten sicherheitsrelevanten Steuerungseinrichtungen stellen in der Regel sehr sensible Systeme dar, die auf einen Ausfall des Fahrzeugbusses empfindlich reagieren. Aufgrund der nicht-rücksetzbaren Ausgestaltung der ersten Steuerungseinrichtungen wird ein Ausfall des ersten Fahrzeugbusses und der genannten ersten Steuerungseinrichtungen weitestgehend vermieden. Dadurch ist die Aufrechterhaltung von wesentlichen Fahrzeugfunktionen während der Umkonfiguration beim Übertritt in die zweite Region unterstützt.

Eine weitere bevorzugte Ausführungsform des Systems zeichnet sich dadurch aus, dass eine an den zweiten Fahrzeugbus angebundene rücksetzbare Steuerungseinrichtung wenigstens folgende Funktionalität umfasst: Antriebssteuerung. Auf diese Weise können für die unterschiedlichen Regionen unterschiedliche Antriebssteuerungen für ein fahrzeugspezifisches Steuergerät bereitgestellt werden.

Eine weitere bevorzugte Ausführungsform des erfindungsgemäßen Systems zeichnet sich dadurch aus, dass wenigstens eine der ersten Steuerungseinrichtungen und/oder der zweiten Steuerungseinrichtungen und/oder der Steuerungsvorrichtung redundant ausgebildet ist. Auf diese Weise lässt sich für das Fahrzeug ein noch sicherer rollender Länderwechsel realisieren.

Eine weitere bevorzugte Ausführungsform des Systems zeichnet sich dadurch aus, dass es ferner einen an die Steuerungsvorrichtung angebundenen Zugbus aufweist, wobei an den Zugbus wenigstens zwei treibende Fahrzeuge angebunden sind, wobei eine Koordination einer Änderung von Funktionalitäten der zweiten Steuerungseinrichtungen der treibenden Fahrzeuge mittels der Steuerungsvorrichtung initiierbar und koordinierbar ist. Aufgrund der Tatsache, dass die die Steuerungsvorrichtung der Zugbus mit der Steuerungseinrichtung verbunden ist, ist eine durchgängige Kontrollierbarkeit der treibenden Fahrzeuge unterstützt. Dadurch ist ermöglicht, dass Funktionalitäten der Steuerungseinrichtungen am Zugbus permanent aktiv bleiben und dadurch minimal erforderliche Funktionalitäten der ersten Steuerungseinrichtungen sämtlicher Fahrzeuge. Im Ergebnis wird dadurch eine sichere Mehrfachtraktionsfähigkeit des Fahrzeugs ermöglicht.

Als besonders vorteilhaft wird bei der Erfindung angesehen, dass ein Umbooten bzw. Umkonfigurieren von regionsspezifischen Programmen im rollenden Betrieb des Schienenfahrzeugs möglich ist. Dadurch kann eine Wiederzulassung von bereits zugelassenen Steuerungsprogrammen sehr erleichtert sein, da die Steuerungsprogramme mittels der zweiten Steuerungseinrichtungen in regionsspezifischen Varianten verwendet werden, wobei die Steuerungsprogramme regionsspezifisch geändert und/oder ausgetauscht werden können, ohne die Funktionalität anderer regionsspezifischer Steuerungsprogramme zu beeinflussen.

Bei einer Änderung eines Steuerungsprogramms für eine Region ist somit keine Neuzulassung der anderen Steuerungsprogramme in anderen Regionen erforderlich

Die Aufgabe wird weiterhin durch ein Computerprogrammprodukt mit dem Merkmalen des unabhängigen Anspruchs 11 gelöst.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit zwei Figuren näher erläutert werden.
- FIG 1: zeigt in prinzipieller Weise ein Blockschaltbild einer Ausführungsform des vorgeschlagenen Systems,
- FIG 2: zeigt ein prinzipielles Ablaufdiagramm eines vorgeschlagenen Verfahrens zum überregionalen Betreiben eines Fahrzeugs.

Vorgeschlagen wird, eine Architektur eines Systems zur Fahrzeugsteuerung in zwei unterschiedliche Bereiche mit jeweils zugeordneten Steuerungsfunktionalitäten zu unterteilen. Das Fahrzeug kann dabei beispielsweise als ein Schienenverkehrsfahrzeug (Lokomotive, Steuerwagen, usw.), Fahrzeug für den Straßenverkehr, Wasserfahrzeug, usw. ausgebildet sein, das unterschiedliche Regionen befährt und dabei unterschiedliche Funktionalitäten benötigt. Im Folgenden wird von einem Fahrzeug in Form eines Schienenverkehrsfahrzeugs ausgegangen.

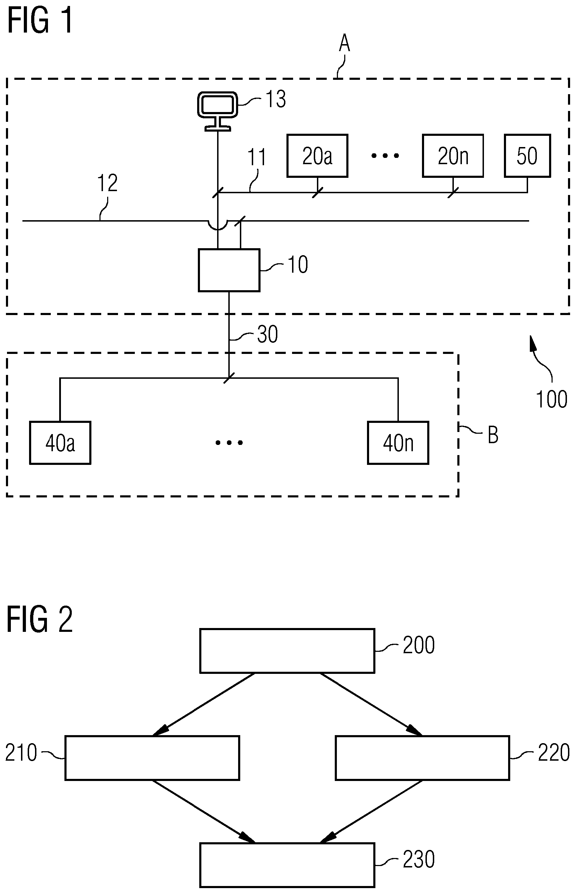

FIG 1 zeigt ein prinzipielles Blockschaltbild einer Ausführungsform eines Systems 100 zum überregionalen Betreiben eines Fahrzeugs. Besonders bevorzugt ist das Fahrzeug als ein Schienenverkehrsfahrzeug, insbesondere eine Lokomotive ausgebildet, für die in verschiedenen Ländern unterschiedliche Vorschriften für den Betrieb bestehen, und die daher mit einer Vielzahl von Funktionalitäten, die von Rechnereinrichtungen realisiert werden, ausgestattet sein müssen. Dabei müssen die genannten Programme üblicherweise vor den dafür zuständigen behördlichen Zulassungsstellen zertifiziert bzw. zugelassen werden.

Erkennbar ist ein während der rollenden Transition stabiler bzw. nicht umzukonfigurierender Bereich A des Systems 100, der alle Komponenten enthält, die während der genannten rollenden Transition stabil bleiben müssen. Der stabile Bereich A kann alle Anzeigeelemente, die während der Transition vom Triebfahrzeugführer benötigt werden, wie zum Beispiel einen Zugbus und alle Steuergeräte, die während der Transition vollfunktional in Betrieb bleiben müssen, enthalten. Zu diesem Zweck ist die Steuerungsvorrichtung 10 an einen ersten Fahrzeugbus 11 angebunden, an den eine definierte Anzahl von ersten Steuerungseinrichtungen 20a...20n angebunden ist.

Über den ersten Fahrzeugbus 11 sind weiterhin eine definierte Anzahl von ersten Steuerungseinrichtungen 20a...20n an die Steuerungsvorrichtung 10 angebunden. An den ersten Fahrzeugbus 11 ist ferner eine Eingabeeinrichtung 13, beispielsweise in Form eines Terminals angebunden, über das ein Anwender (z.B. ein Triebfahrzeugführer) Instruktionen an die Steuerungsvorrichtung 10 absetzen kann, beispielsweise um einen Beginn einer rollenden Transition anzuzeigen.

Die Steuerungsvorrichtung 10 ist vorzugsweise als ein elektronischer Steuerrechner ausgebildet, der wesentliche Fahrzeugfunktionen während der rollenden Transition bereitstellt. Die Steuerungsvorrichtung 10 kann zum Beispiel eine Geschwindigkeitserfassung, eine Sicherheitsfahrschaltung (SIFA), eine Aufbereitung von Daten für den Triebfahrzeugführer, eine Bereitstellung von notwendigen Daten für die Zugsicherungssysteme, Brems- bzw. Sandungsfunktionen, usw. beinhalten.

Ferner im System 100 vorgesehen ist ein umzukonfigurierender Bereich B, der alle Komponenten enthält, deren Funktionalität während der rollenden Transition definiert geändert werden muss, vorzugsweise in Form eines Umbootens oder Umkonfigurierens von Steuerungssoftware für Steuerungseinrichtungen. Zu diesem Zweck ist die Steuerungsvorrichtung 10 weiterhin an einen zweiten Fahrzeugbus 30 angebunden.

Mittels des ersten Fahrzeugbusses 11 sind die genannten ersten Steuerungseinrichtungen 20a...20n funktional mit der Steuerungsvorrichtung 10 verbunden und repräsentieren in Kombination mit den an den zweiten Fahrzeugbus 30 angebundenen zweiten Steuerungseinrichtungen 40a...40n eine Leittechnik des Fahrzeugs. Beispielweise realisieren die zweiten Steuerungseinrichtungen 40a...40n regions- bzw. länderspezifische Antriebsrechner für das Fahrzeug.

In den zweiten Steuerungseinrichtungen 40a...40n sind eine definierte Anzahl von voneinander unabhängigen Steuerungsprogrammen ("Steuerungssoftware") hinterlegt, die jeweils für abgeschlossene Regionen (z.B. ein Land oder eine Gruppe von Ländern), in denen das Fahrzeug betrieben wird, für die Steuerungseinrichtungen 40a...40n verwendet wird. Die Region bzw. das Land, in welchem sich das Fahrzeug gerade aufhält, kann mittels einer an den ersten Fahrzeugbus 11 angeschlossenen Verortungseinrichtung 50 ermittelt werden. Die Verortungseinrichtung 50 kann dabei beispielsweise als ein GPS-Sensor, und/oder eine Kameraeinrichtung und/oder eine Balise ausgebildet sein.

Abhängig von der Region, in der sich das Fahrzeug gerade aufhält, beispielsweise anlässlich eines Grenzübertritts von einem Land in ein anderes, wird ein Steuerungsprogramm unter der Aufsicht der Steuerungsvorrichtung 10 in zugeordnete zweite Steuerungseinrichtungen 40a...40n umgeladen bzw. umkonfiguriert. Die Steuerungsvorrichtung 10 kann diesen Umkonfigurations- bzw. Umbootprozess initiieren und auch feststellen, dass alle mit Steuerungsprogrammen beaufschlagten zweiten Steuerungseinrichtungen 40a...40n wiederum synchron sind, wodurch der Betrieb des Fahrzeugs in der neuen Region mit den dort zugelassenen Steuerungsprogrammen aufgenommen werden kann.

Vorteilhaft kann auf diese Weise der Betrieb des Fahrzeugs während der rollenden Transition mittels der minimalen Steuerungsfunktionalität der Steuervorrichtung 10 und optional zusätzlich mit der minimalen Funktionalität der ersten Steuerungseinrichtungen 20a...20n durchgeführt werden.

Nach vollendeter Transition wird der Betrieb des Fahrzeugs auch mit den Funktionalitäten der zweiten Steuerungseinrichtungen 40a...40n durchgeführt.

Alle verwendeten ersten Steuereinrichtungen 20a...20n und/oder zweiten Steuerungseinrichtungen 40a...40n und/oder die Steuerungsvorrichtung 10 können entweder einfach oder in redundanter Ausführung in der dadurch realisierten Leittechnik integriert sein.

Im Falle der redundanten Nutzung werden "Reservegeräte" umgeladen, wobei ab einem Zeitpunkt einer Betriebsbereitschaft eine geordnete Aktivierung dieser Geräte erfolgt. Die vormals aktiven Geräte nehmen dann gleichzeitig die Rolle von Reservegeräten ein.

Die Steuerungsvorrichtung 10 kann ferner an einen Zugbus 12 (z.B. Wire Train Bus WTB, ETB, ZXS) angebunden sein. Auf diese Weise kann die Steuerungsvorrichtung 10 an sämtliche treibende Fahrzeuge eines Fahrzeugverbunds angebunden sein, und auf diese Weise ein Umbooten bzw. Umkonfigurieren sämtlicher zweiter Steuerungseinrichtungen der treibenden Fahrzeuge überwachen. Eine Mehrfachtraktionsfähigkeit des Fahrzeugs ist auf diese Weise vorteilhaft unterstützt.

Vorteilhaft können bei einer Software-Umkonfiguration oder Software-Umladen wesentliche Fahrzeugfunktionen beibehalten werden. Somit werden fahrende/rollende Grenzübertritte bei Verwendung unterschiedlicher Fahrzeug-Software in Start- und Zielland ohne Unterbrechung der Fahrt möglich. Durch die Definition des stabilen Bereichs A können Systeme, die lange Boot- oder Konfigurationszeiten haben, weiterbetrieben werden, weil sie von der Steuerungsvorrichtung 10 mit Daten versorgt werden.

Der Zugbus 12 bleibt während der rollenden Transition in Betrieb. Eine Mehrfachtraktionsfähigkeit des Zugverbandes bleibt somit vorteilhaft erhalten. Auf diese Weise können mittels des Zugbus 12 mehrere Fahrzeuge verbunden werden, wobei mittels der Steuerungsvorrichtung 10 Umkonfigurationen der zweiten Steuerungseinrichtungen vorgenommen und überwacht werden können.

Auf diese Weise kann beispielsweise eine Bereitstellung und eine Zulassung von einzelnen Steuerungsprogrammen für die jeweiligen Regionen bzw. Länder durchgeführt werden, ohne jeweils die gesamte Steuerungssoftware jeweils wieder vor allen einzelnen Zulassungsbehörden zu zertifizieren. Im Ergebnis ist dadurch eine vereinfachte und kostengünstige Benutzung und Verwaltung der Steuerungssoftware des Fahrzeugs unterstützt.

Im Ergebnis ist dadurch vorteilhaft eine komfortable und sichere rollende Transition des Fahrzeugs möglich. Eine effiziente und ökonomische Nutzung bzw. Verwaltung der genannten Steuerungssoftware der zweiten Steuerungseinrichtungen 40a...40n ist auf diese Weise ermöglicht.

Im Ergebnis sind mit dem vorgeschlagenen System 100 länder- bzw. regionsspezifische Steuerungsprogramme für das Fahrzeug einfach nutzbar. Daraus resultiert vorteilhaft eine Entkopplung von nationalen Anforderungen und Zulassungsbehörden.

Im Ergebnis verfügt die Leittechnik in der oben beschriebenen Weise über eine Überwachungsfunktion in Form der Steuerungsvorrichtung 10, die das Umladen bzw. Umbooten der Steuerungsprogramme der zweiten Steuerungseinrichtungen 40a...40n initiiert, koordiniert und überwacht.

Das Umladen der Programme in die jeweils zugeordneten zweiten Steuerungseinrichtungen 40a..40n kann auf folgende Weise initiiert werden:
a) manuell durch einen die Eingabeeinrichtung 13 bedienenden Triebfahrzeugführer
b) automatisch getriggert durch die Verortungseinrichtung
c) eine Kombination aus den Varianten a) und b), wobei in diesem Fall eine Art Rückfallposition durch der Variante a) vorliegt. Dies ist z.B. für einen Fall nützlich, in welchem das GPS-Signal nicht fehlerfrei vorliegt oder eine Kamera zur Umgebungserkennung nicht einwandfrei funktioniert.

Mit der Erfindung kann vorteilhaft die Steuerungssoftware exakt auf Ländervorgaben ausgelegt werden, wodurch für ein Land nicht relevante Funktionen nicht vorhanden sind, deren sichere Abschaltung nicht nachgewiesen werden muss. Dadurch ergibt sich vorteilhaft eine verringerte Softwarekomplexität, eine reduzierte Gefahr von zu spät entdeckten, kostenintensiven Seiteneffekten, was vorteilhaft in kürzeren Software-Entwicklungszeiten resultiert. Ferner ist vorteilhaft eine Erhöhung einer Wiederverwendbarkeit von Steuerungssoftware gegeben. Ferner ist vorteilhaft eine Gefahr, das Fahrzeug mit falschen Parametern und/oder falschen Funktion in ein Land einzufahren, reduziert.

FIG 2 zeigt ein prinzipielles Ablaufdiagramm einer Ausführungsform des erfindungsgemäßen Verfahrens zum überregionalen Betreiben eines Fahrzeugs.

In einem Schritt 200 wird ein Bereitstellen einer definierten Minimalfunktionalität während eines rollenden Übergangs des Fahrzeugs von einer definierten ersten Region in eine definierte zweite Region mittels der Steuerungsvorrichtung (10) durchgeführt.

In einem Schritt 210 wird ein Ändern einer Funktionalität für die zweiten Steuerungseinrichtungen 40a...40n während des rollenden Übergangs von der definierten ersten Region in die definierte zweite Region mittels der Steuerungsvorrichtung 10 durchgeführt.

In einem parallel zu Schritt 210 ablaufenden Schritt 220 wird ein Betreiben des Fahrzeugs während des Übergangs von der definierten ersten Region in die definierte zweite Region mittels der Funktionalitäten der ersten Steuerungseinrichtungen 20a...20n durchgeführt.

In einem Schritt 230 erfolgt ein Übergang bzw. eine Rückkehr in den Normalbetrieb des Fahrzeugs nach Abschluss der Umkonfiguration während der rollenden Transition.

Für das vollständige Umbooten der zweiten Steuerungseinrichtungen 40a...40n während der rollenden Transition ist vorzugsweise eine Zeitdauer von ca. 90 sec bis ca. 120 sec vorgesehen, sodass in diesem Zeitraum ein geordnetes Umkonfigurieren der Funktionalitäten der zweiten Steuerungseinrichtungen 40a...40n möglich ist.

Zusammenfassend werden mit der vorliegenden Erfindung ein System bzw. eine spezifische Architektur eines Systems und ein Verfahren vorgeschlagen, welches auf einfache Weise ein überregionales Betreiben eines Fahrzeugs ermöglicht. Vorteilhaft ist mittels der Erfindung eine sichere rollende Transition ermöglicht. Vorteilhaft kann mittels des vorschlagen Verfahrens Software ohne aufwendige Parametrierung bereitgestellt und genutzt werden, wodurch eine Fehlerhaftigkeit und mehrmalige Implementation von identischen Funktionen weitestgehend vermieden wird.

## Patentansprüche

1. System (100) zum überregionalen Betreiben eines Fahrzeugs, aufweisend:
- wenigstens eine Steuerungsvorrichtung (10);
- wobei an die Steuerungsvorrichtung (10) ein erster Fahrzeugbus (11) anschließbar ist, wobei an den ersten Fahrzeugbus (11) eine definierte Anzahl von ersten Steuerungseinrichtungen (20a...20n) anschließbar ist; und
- wobei an die Steuerungsvorrichtung (10) ein zweiter Fahrzeugbus (30) anschließbar ist, wobei an den zweiten Fahrzeugbus (30) eine definierte Anzahl von zweiten Steuerungseinrichtungen (40a...40n) anschließbar ist;
- wobei die Steuerungsvorrichtung (10) ausgebildet ist, eine definierte Minimalfunktionalität während eines rollenden Übergangs des Fahrzeugs von einer definierten ersten Region in eine definierte zweite Region bereitzustellen, indem ein Betrieb der ersten Steuerungseinrichtungen und des ersten Fahrzeugbusses aufrecht erhalten wird;
- wobei die Steuerungsvorrichtung (10) ausgebildet ist, für die zweiten Steuerungseinrichtungen (40a...40n) während des rollenden Übergangs von der definierten ersten Region in die definierte zweite Region eine Funktionalität zu ändern; und
- wobei die Steuerungsvorrichtung (10) ausgebildet ist, eine Koordinierung des Änderns der Funktionalität der zweiten Steuerungseinrichtungen zu steuern.

2. System (100) nach Anspruch 1, wobei der erste Fahrzeugbus (11) des Fahrzeugs nicht-rücksetzbar und der zweite Fahrzeugbus (30) des Fahrzeugs rücksetzbar ausgebildet ist.

3. System (100) nach Anspruch 1 oder 2, wobei der Übergang von der definierten ersten Region in die definierte zweite Region mittels einer an die Steuerungsvorrichtung (10) angebundenen Eingabeeinrichtung (13) eingebbar ist.

4. System (100) nach Anspruch 2, **dadurch gekennzeichnet, dass** der Übergang von der definierten ersten Region in die definierte zweite Region an die Steuerungsvorrichtung (10) mittels einer Verortungseinrichtung, vorzugsweise in Form eines GPS-Sensors, und/oder einer Kameraeinrichtung und/oder einer Balise signalisierbar ist.

5. System (100) nach einem der vorhergehenden Ansprüche, **dadurch gekennzeichnet, dass** eine an den ersten Fahrzeugbus (11) angebundene nicht-rücksetzbare Steuerungseinrichtung (20a...20n) wenigstens eine definierte Kombination aus folgenden Funktionalitäten umfasst: Unterstützungsfunktionen für die Zugsicherung, Sandung, Bremsung, Sicherheitsfahrschaltung, Geschwindigkeitserfassung, Geschwindigkeitsanzeige.

6. System (100) nach einem der vorhergehenden Ansprüche, **dadurch gekennzeichnet, dass** eine an den zweiten Fahrzeugbus (11) angebundene rücksetzbare zweite Steuerungseinrichtung (40a...40n) wenigstens folgende Funktionalität umfasst: Antriebssteuerung.

7. System (100) nach einem der vorhergehenden Ansprüche, **dadurch gekennzeichnet, dass** wenigstens eine der ersten Steuerungseinrichtungen (20a...20n) und/oder der zweiten Steuerungseinrichtungen (40a...40n) und/oder der Steuerungsvorrichtung (10) redundant ausgebildet ist.

8. System (100) nach einem der vorhergehenden Ansprüche, ferner aufweisend einen an die Steuerungsvorrichtung (10) angebundenen Zugbus (12), wobei an den Zugbus (12) wenigstens zwei treibende Fahrzeuge angebunden sind, wobei eine Koordination der Änderung von Funktionalitäten der zweiten Steuerungseinrichtungen der treibenden Fahrzeuge mittels der Steuerungsvorrichtung (10) initiierbar und koordinierbar ist.

9. Verfahren zum überregionalen Betreiben eines Fahrzeugs, mittels eines Systems (100) mit wenigstens einer Steuerungsvorrichtung (10), einem an die Steuerungsvorrichtung (10) angeschlossenen ersten Fahrzeugbus (11) mit einer definierten Anzahl von an den ersten Fahrzeugbus (11) angeschlossenen ersten Steuerungseinrichtungen (20a...20n); und einem an die Steuerungsvorrichtung (10) angeschlossenen zweiten Fahrzeugbus (30) mit einer definierten Anzahl von an den zweiten Fahrzeugbus (30) angeschlossenen zweiten Steuerungseinrichtungen (40a...40n), aufweisend die Schritte:
- Bereitstellen einer definierten Minimalfunktionalität während eines rollenden Übergangs des Fahrzeugs von einer definierten ersten Region in eine definierte zweite Region mittels der Steuerungsvorrichtung (10), indem ein Betrieb der ersten Steuerungseinrichtungen und des ersten Fahrzeugbusses aufrecht erhalten wird;
- Ändern einer Funktionalität der zweiten Steuerungseinrichtungen (40a...40n) während des rollenden Übergangs von der definierten ersten Region in die definierte zweite Region mittels der Steuerungsvorrichtung (10);
- Betreiben des Fahrzeugs während des Übergangs von der definierten ersten Region in die definierte zweite Region mittels der Minimalfunktionalität der Steuerungsvorrichtung (10); und
- Übergehen in den Normalbetrieb des Fahrzeugs.

10. Verfahren nach Anspruch 9, **dadurch gekennzeichnet, dass** die Funktionalitäten der ersten und der zweiten Steuerungseinrichtungen mittels Steuerungsprogrammen gesteuert werden.

11. Computerprogrammprodukt, welches vorzugsweise auf einem computerlesbaren Datenträger gespeichert ist, mit Programmcodemitteln zur Ausführung des Verfahrens nach Anspruch 9 oder 10, wenn es auf der Steuerungsvorrichtung (10) des Systems (100) zum überregionalen Betreiben eines Fahrzeugs nach einem der Ansprüche 1 - 8 abläuft.

## Claims

1. System (100) for the supraregional operation of a vehicle, having:
- at least a control device (10);
- wherein a first vehicle bus (11) is able to be connected to the control device (10), wherein a defined number of first control apparatuses (20a...20n) is able to be connected to the first vehicle bus (11); and
- wherein a second vehicle bus (30) is able to be connected to the control device (10), wherein a defined number of second control apparatuses (40a...40n) is able to be connected to the second vehicle bus (30);
- wherein the control device (10) is designed to provide a defined minimum functionality during a moving crossing of the vehicle from a defined first region to a defined second region by maintaining operation of the first control apparatuses and of the first vehicle bus;
- wherein the control device (10) is designed to change a functionality for the second control apparatuses (40a...40n) during the moving crossing from the defined first region to the defined second region; and
- wherein the control device (10) is designed to control coordination of the change of the functionality of the second control apparatuses.

2. System (100) according to Claim 1, wherein the first vehicle bus (11) of the vehicle is designed to be non-resettable and the second vehicle bus (30) of the vehicle is designed to be resettable.

3. System (100) according to Claim 1 or 2, wherein the crossing from the defined first region to the defined second region is able to be input by means of an input apparatus (13) connected to the control device (10).

4. System (100) according to Claim 2, **characterized in that** the crossing from the defined first region to the defined second region is able to be signaled to the control device (10) by means of a positioning apparatus, preferably in the form of a GPS sensor and/or of a camera apparatus and/or of a beacon.

5. System (100) according to one of the preceding claims, **characterized in that** a non-resettable control apparatus (20a...20n) connected to the first vehicle bus (11) comprises at least one defined combination of the following functionalities: support functions for train safety, sanding, braking, driver safety switch, speed recording, speed display.

6. System (100) according to one of the preceding claims, **characterized in that** a resettable second control apparatus (40a...40n) connected to the second vehicle bus (30) comprises at least the following functionality: drive control.

7. System (100) according to one of the preceding claims, **characterized in that** at least one of the first control apparatuses (20a...20n) and/or the second control apparatuses (40a...40n) and/or the control device (10) is designed to be redundant.

8. System (100) according to one of the preceding claims, furthermore having a train bus (12) connected to the control device (10), wherein at least two drive vehicles are connected to the train bus (12), wherein coordination of the change of functionalities of the second control apparatuses of the drive vehicles is able to be initiated and coordinated by means of the control device (10).

9. Method for the supraregional operation of a vehicle by means of a system (100) having at least a control device (10), a first vehicle bus (11) connected to the control device (10) and having a defined number of first control apparatuses (20a...20n) connected to the first vehicle bus (11); and a second vehicle bus (30) connected to the control device (10) and having a defined number of second control apparatuses (40a...40n) connected to the second vehicle bus (30), having the steps:
- providing a defined minimum functionality during a moving crossing of the vehicle from a defined first region to a defined second region by means of the control device (10) by maintaining operation of the first control apparatuses and of the first vehicle bus;
- changing a functionality of the second control apparatuses (40a...40n) during the moving crossing from the defined first region to the defined second region by means of the control device (10);
- operating the vehicle during the crossing from the defined first region to the defined second region by means of the minimum functionality of the control device (10); and
- transitioning into normal operation of the vehicle.

10. Method according to Claim 9, **characterized in that** the functionalities of the first and of the second control apparatuses are controlled by means of control programs.

11. Computer program product, which is preferably stored on a computer-readable data carrier, having program code means for executing the method according to Claim 9 or 10 when it runs on the control device (10) of the system (100) for the supraregional operation of a vehicle according to one of Claims 1 - 8.

## Revendications

1. Système (100) pour l'exploitation interrégionale d'un véhicule, comportant:
au moins un dispositif de commande (10) ;
au dispositif de commande (10) pouvant être raccordé un premier bus de véhicule (11), au premier bus de véhicule (11) pouvant être raccordé un nombre défini de premiers équipements de commande (20a...20n) ; et
au dispositif de commande (10) pouvant être raccordé un deuxième bus de véhicule (30), au deuxième bus de véhicule (30) pouvant être raccordé un nombre défini de deuxièmes équipements de commande (40a...40n) ;
le dispositif de commande (10) étant conçu pour fournir une fonctionnalité minimale définie pendant un passage roulant du véhicule d'une première région définie vers une deuxième région définie par maintien d'un fonctionnement des premiers équipements de commande et du premier bus de véhicule ;
le dispositif de commande (10) étant conçu pour modifier une fonctionnalité pour les deuxièmes équipements de commande (40a...40n) pendant le passage roulant de la première région définie vers la deuxième région définie ; et
le dispositif de commande (10) étant conçu pour commander une coordination de la modification de la fonctionnalité des deuxièmes équipements de commande.

2. Système (100) selon la revendication 1, le premier bus de véhicule (11) du véhicule étant conçu de manière à ne pas pouvoir être réinitialisé et le deuxième bus de véhicule (30) du véhicule, de manière à pouvoir être réinitialisé.

3. Système (100) selon la revendication 1 ou 2, le passage de la première région définie vers la deuxième région définie pouvant être entré au moyen d'un dispositif d'entrée (13) relié au dispositif de commande (10).

4. Système (100) selon la revendication 2, **caractérisé en ce que** le passage de la première région définie vers la deuxième région définie peut être signalé au dispositif de commande (10) au moyen d'un dispositif de localisation, de préférence sous la forme d'un capteur GPS et/ou d'un dispositif de caméra et/ou d'une balise.

5. Système (100) selon l'une des revendications précédentes, **caractérisé en ce qu'**un équipement de commande non réinitialisable (20a...20n) relié au premier bus de véhicule (11) comprend au moins une combinaison définie des fonctionnalités suivantes : fonctions d'assistance pour la sécurisation des trains, sablage, freinage, dispositif d'homme mort, détection de la vitesse, affichage de la vitesse.

6. Système (100) selon l'une des revendications précédentes, **caractérisé en ce qu'**un deuxième équipement de commande réinitialisable (40a...40n) relié au deuxième bus de véhicule (11) comprend au moins la fonctionnalité suivante : commande de propulsion.

7. Système (100) selon l'une des revendications précédentes, **caractérisé en ce qu'**au moins un des premiers équipements de commande (20a...20n) et/ou des deuxièmes équipements de commande (40a...40n) et/ou le dispositif de commande (10) est conçu de manière redondante.

8. Système (100) selon l'une des revendications précédentes, comportant en outre un bus de train (12) relié au dispositif de commande (10), au bus de train (12) étant reliés au moins deux véhicules moteurs, une coordination de la modification de fonctionnalités des deuxièmes équipements de commande des véhicules moteurs pouvant être initiée et coordonnée au moyen du dispositif de commande (10).

9. Procédé pour l'exploitation interrégionale d'un véhicule au moyen d'un système (100) comportant au moins un dispositif de commande (10), un premier bus de véhicule (11), raccordé au dispositif de commande (10), avec un nombre défini de premiers équipements de commande (20a...20n) raccordés au premier bus de véhicule (11) ; et un deuxième bus de véhicule (30), raccordé au dispositif de commande (10), avec un nombre défini de deuxièmes équipements de commande (40a...40n) raccordés au deuxième bus de véhicule (30), comportant les étapes suivantes
- mise à disposition d'une fonctionnalité minimale définie pendant un passage roulant du véhicule d'une première région définie vers une deuxième région définie au moyen du dispositif de commande (10) par maintien d'un fonctionnement des premiers équipements de commande et du premier bus de véhicule ;
- modification d'une fonctionnalité des deuxièmes équipements de commande (40a...40n) pendant le passage roulant de la première région définie vers la deuxième région définie au moyen du dispositif de commande (10) ;
- exploitation du véhicule pendant le passage roulant de la première région définie vers la deuxième région définie au moyen de la fonctionnalité minimale du dispositif de commande (10) ; et
- passage au fonctionnement normal du véhicule.

10. Procédé selon la revendication 9, **caractérisé en ce que** les fonctionnalités des premiers et des deuxièmes équipements de commande sont commandées au moyen de programmes de commande.

11. Produit de programme informatique qui est sauvegardé de préférence sur un support de données lisible par ordinateur, comportant des moyens de code de programme pour exécuter le procédé selon la revendication 9 ou 10 lorsqu'il tourne sur le dispositif de commande (10) du système (100) pour l'exploitation interrégionale d'un véhicule selon l'une des revendications 1 - 8.
